# EUROPEAN PATENT SPECIFICATION

(11) **EP 3 827 950 B1**
(45) Date of publication and mention of the grant of the patent: **08.10.2025**
(21) Application number: 20209018.9
(22) Date of filing: 20.11.2020
(51) Int. Cl.: B27M 1/08, B27C 5/06

(54) **MACHINE FOR MACHINING PANELS**
MASCHINE FÜR DIE BEARBEITUNG VON PANELEN
MACHINE POUR L'USINAGE DE PANNEAUX

(30) Priority: 29.11.2019 IT 201900022470
(43) Date of publication of application: 02.06.2021
(73) Proprietor: SCM Group S.p.A., 47921 Rimini (RN) (IT)
(72) Inventor: GIGLIOTTI, Fabrizio, 47921 RIMINI (IT); TIEZZI, Livio, 47921 RIMINI (IT); TIEZZI, Giovanni, 47921 RIMINI (IT)
(74) Representative: Tiburzi, Andrea

(56) References cited:
- EP-A1- 1 719 574
- WO-A1-92/12816
- DE-A1- 19 636 139
- DE-A1- 19 951 518
- DE-U1- 202010 008 902

## Description

### Technical field of the invention

The present invention relates to a machine for machining a panel made of wood, plastic fiberglass, glass or the like, according to the preamble of independent claim 1. Such a machine is known from the document WO 92/12816 A1.

### State of the art

As mentioned above, the reference sector is that of machines used to machine panels, preferably made of wood, of large sizes, such as "cross lam timber" panels, commonly referred to with the acronym "CLT", and used for in the sector of green building.

In light of the considerable size of the panels being machined, these are demanding processes, also in consideration of the fact that, according to specific needs, in addition to the traditional machining on the side surfaces, during the advancement of the panel, also workings on the lower and/or upper, head and/or tail surface of the panel to be machined are performed.

The prior art provides a belt or chain advancing system for the panel. On the machine surface, there are belt or chain elements for dragging the panel from the loading area to the discharging area of the machine.

However, the advancement of belts or chains does not guarantee the maintenance of the correct positioning of the panel along with the entire loading, processing, and discharging path.

Therefore, it is necessary to resort to control systems, provided along a sliding plane of the machine, to detect the extent of undesired movements of the panel, and to systems for restoring the position of the panel being machined.

The disadvantage of the known type of advancement system is that the installation on the machine and the maintenance of the belt or chain elements, and of the relative actuation means, is not very functional.

Furthermore, the need to resort to control systems for positioning the panel involves a further element of complexity in the design and management of the advancement system. The possible incorrect positioning of the panel and the consequent need to restore its position, lead to a reduced production efficiency of the known systems and a possible poor machining precision, due to possible errors in the repositioning of the panel itself.

Documents DE 196 36 139, DE 199 51 518, DE 20 2010 008902, EP 1 719 574 and WO 92/12816 are representative of the available art.

### Summary of the invention

On the basis of the above, the technical problem posed and solved by the present invention is that of providing a machine, which allows overcoming the drawbacks mentioned above with reference to the prior art.

This problem is solved by a machine for processing panels according to claim 1.

Preferred features of the present invention are in the dependent claims.

The present invention provides some relevant advantages.

In particular, the feature of providing panel gripping means allows avoiding deviations of a panel to be machined with respect to a predetermined position, in particular with respect to a main advancement axis.

Advantageously, this feature allows optimizing the production efficiency, further reducing both the design and the management complexity, both of the panel advancing group and of the machine.

Another advantage of the present invention is the improvement of machining accuracy.

A further advantage is that the solution according to the present invention allows the panel to be kept in place not only in the profiling operations on the lateral surfaces of the panel, but also in case of operations on the lower surface of the panel, in particular performed by a machining head provided below the machine supporting plane or on the upper surface of the panel.

Other advantages, features, and methods of use of the present invention will become apparent from the following detailed description of some embodiments, presented by way of non-limiting example.

It is therefore specific object of the present invention a machine for machining a panel made of wood, plastic, fiberglass, glass or the like, wherein said panel has a first and a second lateral surface, a head surface and an end surface, a lower surface and an upper surface, respectively opposite to each other, said squaring machine comprising a base, a panel supporting plane, arranged on said base, wherein said supporting plane is divided into a first supporting half-plane, having a panel loading area, and a second supporting half-plane, having a panel discharging area, wherein a machining area is provided between said first supporting half-plane and said second supporting half-plane, machining means for machining the panel, positioned at said machining area, configured to machine the panel, and a panel advancing group configured to move the panel from said loading area of said first supporting half-plane to said discharging area of said second supporting half-plane, wherein said machine is characterized in that said panel advancing group comprises panel gripping means, configured to grip at least two opposite faces of the panel when the panel is moved to said loading area of said first supporting half-plane or to said discharging area of said second supporting half-plane or from said loading area of said first supporting half-plane to said discharging area of said second supporting half-plane, said machining means comprises at least one machining group arranged below said supporting plane and configured to machine at least the lower surface of the panel.

Further according to the invention, said machining means comprises at least one machining group arranged laterally to said supporting plane, configured for machining said first and/or said second lateral surface.

Preferably according to the invention, said advancing group comprises moving means of said gripping means configured for moving said gripping means along said main extension axis of the squaring machine.

Still according to the invention, said gripping means comprises at least one vice element to grip the panel.

Preferably according to the invention, said moving means comprises a supporting crossbar, positioned or positionable transversely to the main extension axis of the squaring machine, said at least one panel gripping vice being slidably coupled or fixed to said supporting crossbar and configured for gripping the panel.

Still according to the invention, said at least one gripping vice of said advancing group comprises two jaws having gripping surfaces substantially parallel to said supporting plane and configured to grasp the panel at the end surface or at the head surface, to maintain and/or to move the panel at the desired position.

Preferably according to the invention, said at least one gripping vice of said advancing group comprises two jaws having gripping surfaces substantially perpendicular to said supporting plane and configured to grasp the panel at the first lateral surface and/or at the second lateral surface, to maintain and/or to move the panel at the desired position.

Further according to the invention, said gripping means comprises at least a pair of conveyor belts, wherein each pair comprises a first and a second belt vertically aligned and spaced apart, or spaceable apart, so as to allow a gripping of at least a portion of said panel being machined between said first and second belt.

Still according to the invention, said moving means comprises at least one pulley, keyed on a shaft transverse to the main extension axis of the machine, wherein at least one belt of said pair of conveyor belts is wound on said pulley and configured to be coupled to a surface of the panel being machined.

Preferably according to the invention, said machine comprises actuator means configured to vertically move said belts and to adjust their relative distance, according to the thickness of the panel.

Further according to the invention, said machine comprises at least one pressing element positioned or positionable at said machining area configured to counteract the stresses on the panel generated, during the machining, by said machining means.

Still according to the invention, said at least one pressing element is coupled to a further supporting crosspiece, positioned or positionable transversely to the main extension axis of the squaring machine.

Preferably according to the invention, said machine comprises at least one pair of linear sliding guides positioned or positionable at said base, substantially parallel to said main extension axis, wherein said moving means, and/or said further supporting crosspiece, are slidably coupled to said at least one pair of linear sliding guides.

It is further object of the present invention an advancing group, configured to allow the advancement of a panel along a supporting surface of the panels being machined by a machine, wherein said advancing group comprises gripping means of the panel and moving means of said gripping means, configured to move said gripping means along an axis of main extension of the squaring machine, the overall configuration of said advancing group being such that during an advancement of the panel being machined, said gripping means are moved from a loading zone to a discharge zone of a supporting surface of the squaring machine to guide the advancement of the panel being processed.

### Brief description of the figures

The present invention will be now described, for illustrative but not limitative purposes, according to its preferred embodiments, with particular reference to the figures of the enclosed drawings, wherein:
figure 1 illustrates a perspective view of a first embodiment of the machine according to the present invention, in an operating configuration;
figure 2 illustrates a side view of the machine of figure 1;
figure 3 illustrates a top view of the machine of figure 1;
figure 4 illustrates an enlarged detail of the machine of figure 1;
figure 5 illustrates the enlarged detail of figure 4 in a further operative configuration;
figure 6 illustrates a perspective view of the machine of figure 1 in a still further operative configuration;
figure 7 illustrates a perspective view of a feeding area of the first embodiment of the machine according to the present invention shown in figure 1;
figure 8 illustrates a perspective view of a feeding area of a second embodiment of the machine according to the present invention;
figure 9 illustrates a perspective view of a machining area of a third embodiment of the machine according to the present invention.

In the various figures, similar parts will be indicated by the same reference numbers.

### Detailed description of preferred embodiments

With reference to the attached figures, the reference M generically indicates a machine according to the present invention, having a main extension axis A, substantially parallel to an X-axis of the Cartesian reference system XYZ.

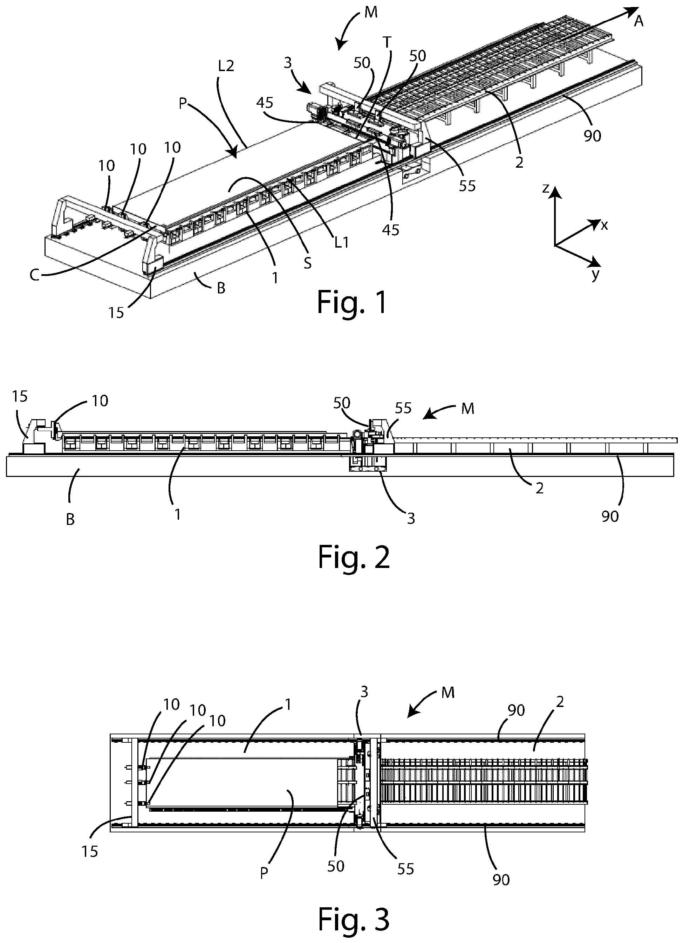

As shown in figure 1, the horizontal axis A is also the feed and advancement axis of the panels P being processed.

By panel P we mean a panel having a head surface T and a tail surface C, two lateral surfaces L1 and L2, an upper surface S and a lower surface I, for example, made of wood, plastic, fiberglass, glass, or composite materials or the like.

The machine according to the invention provides a base B for resting the machine itself on the ground, and a support surface for the panels P being processed, arranged on the base B.

In a further embodiment, the base B coincides with the ground which directly supports the support plane of the panels P.

The support plane is divided into a first support half-plane 1, having a loading area of the panel P being processed, and a second support half-plane 2, having an discharging area of the panel P being processed.

As shown in the figures, a machining area 3 is provided between the first support half-plane 1 and the second support half-plane 2, in correspondence with which means for working the panel P are positioned.

As will be better described below, the panel machining means are configured to perform the machining on the side L1 and/or L2, and/or the head T and/or the tail C and/or lower I and/or upper S surface of the panel P.

The machine M described here also comprises an advancing group, or pushing unit, of the panel P, configured to move the panel P from a loading area of the first support half-plane 1 to a discharging area of the second support half-plane 2.

The advancing group comprises means for gripping or taking the panel, configured to grip the panel P on at least two opposite faces when the panel P being processed is moved from the loading area of the first support half-plane 1 to the discharge area of the second half-plane of support 2.

Therefore, the panel is constrained with respect to undesired displacements of the panel itself with respect to the supporting plane during the movement of the panel or during the machinings performed, in particular in correspondence with the machining area 3.

Advantageously, the advancing group also comprises movement means of the gripping means, configured to move the gripping means along the main extension axis A of the squaring machine.

In particular, the moving means comprise a support crosspiece 15, positioned or positioned transversely to the main extension axis A of the machine.

In a first embodiment of the machine M, the gripping means of the advancing group 100 comprise at least one clamping vice 10 of the panel P being processed. In particular, the clamping vice 10 comprises two jaws having gripping surfaces 10a and 10b substantially parallel to the support plane of the squaring machine.

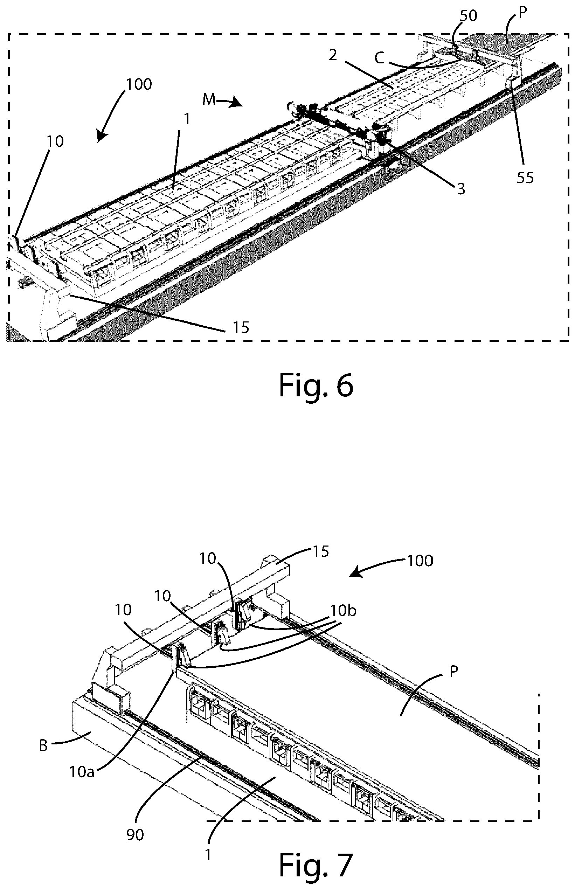

As shown in figure 7, the clamping vice 10 of the panel P is slidingly coupled to the support crosspiece 15 in such a way as to grip the panel P at a tail surface C. Preferably, at least two clamping vices 10 are provided, which are moved along the crosspiece 15, so as to obtain an optimal adjustment according to the sizes, or rather the width, of the panel P.

In other embodiments not shown in the figures, the clamping vice 10 of the panel P is coupled in a fixed manner to the supporting crosspiece 15.

In particular, the clamping vices 10a and 10b are configured to clap the main faces of the panel P, in correspondence with the tail surface C, or the head surface T of the panel P itself, to maintain and/or move the panel P in the desired position.

In a second embodiment of the machine M, the gripping means of the advancing group 200 comprise at least one clamping vice 20 of the panel P being processed.

In particular, the clamping vice 20 comprises two jaws having gripping surfaces 20a and 20b substantially perpendicular to the support plane of the machine.

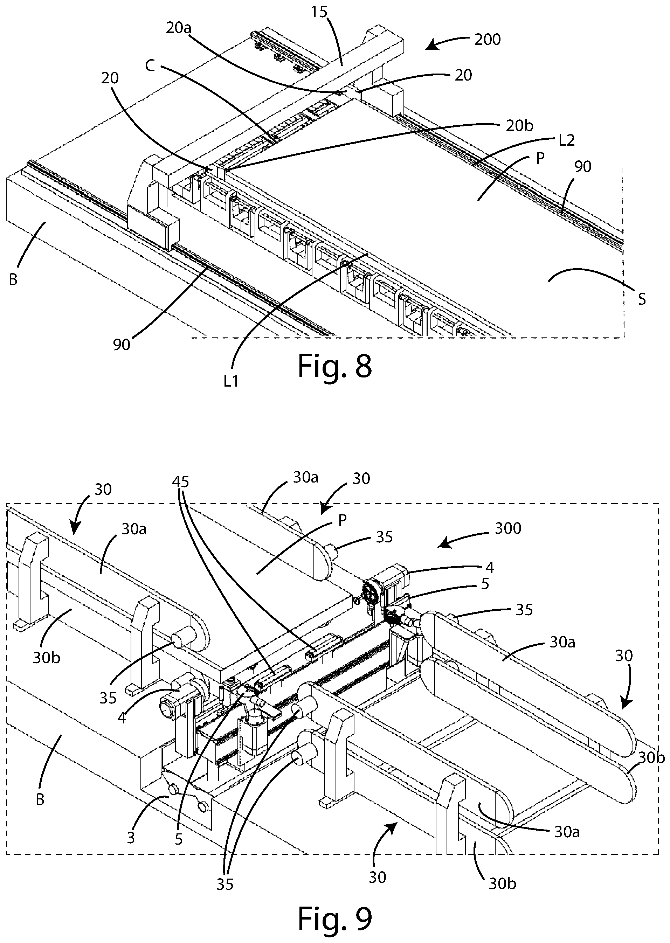

As shown in figure 8, the gripping vice 20 of the panel P is constrained to the support crosspiece 15 in such a way as to grip the panel P at the two lateral surfaces L1 and L2.

In particular, the gripping surfaces 20a and 20b are configured to grip the panel P at the first side surface L1 and/or the second side surface L2 of the panel P, to maintain and/or move the panel P in the desired position.

In a third embodiment of the machine M, the gripping means of the advancing group 300 comprise at least one pair of conveyor belts 30 of the panel P being processed.

In particular, each pair comprises a first and a second belt vertically aligned, superimposed, and spaced apart, in such a way as to allow a gripping of at least one portion of the panel P being processed between the first and second belt.

Each conveyor belt is wound on a pulley 35 keyed on a shaft, transversal to the main extension axis A of the squaring machine.

In particular, each belt 30 is configured to be coupled respectively to a surface face and a lower face of the panel P, to maintain and/or move the panel in the desired position. In an embodiment not shown in the figures, actuator means are provided, which are configured to move at least one belt of said pair of conveyor belts along the Z-axis, in such a way as to adjust a relative distance between the two belts 30 of the pair as a function of thickness of the panel being processed.

In correspondence with the machining area 3, there is also provided at least one pressing element, indicated with the numerical reference 50, configured to counteract the stresses on the panel from below and to keep the panel in position in particular during the machining on the lower surface I.

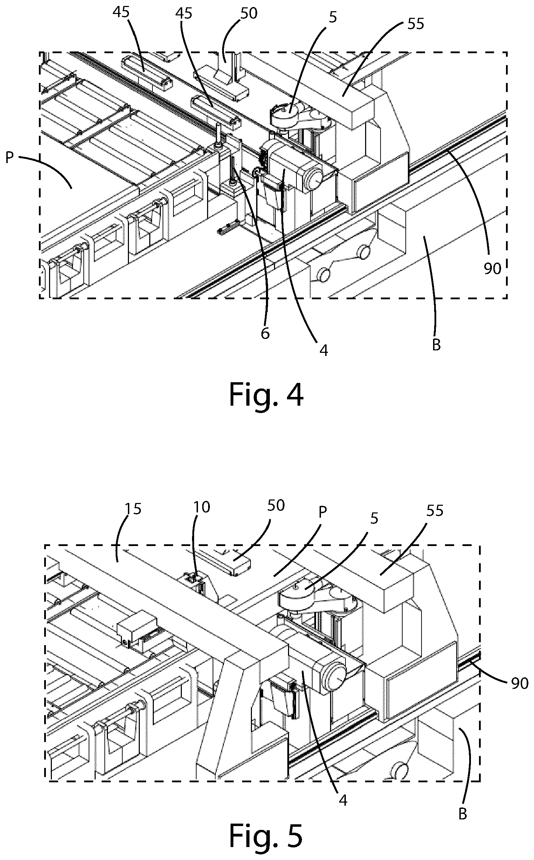

Preferably, as shown in figure 4, in a configuration vertically aligned with the positioning of the pressing element 50, a roller element 45 is provided, on which the panel rests in the machining area.

The roller element 45, which in particular can also provide two rollers in parallel as shown in figure 4, has a rotation axis, perpendicular to the main extension axis A of the machine, in such a way as to allow the sliding of the panel P along the X-axis.

As shown in figure 1, and in the enlarged views of figures 4 and 5, the pressing element 50 is constrained to a further supporting crosspiece 55, positioned, or positionable transversely to the main extension axis A of the squaring machine.

Preferably, the further supporting crosspiece 55 is configured to be moved from a loading area of the second support plane, to a discharging area of the second supporting plane, as shown in figure 6.

In a first embodiment, the further supporting crosspiece 55 is moved by dragging towards the discharging area of the second supporting plane. As shown in the figure, the two crosspieces 15 and 55 are shaped in such a way as to abut each other when the crosspiece 15 is in correspondence with the further crosspiece 55, therefore the further supporting crosspiece 55 is moved by dragging from the movement of the support crosspiece 15.

In a further embodiment, the crosspiece 15 and the further crosspiece 55 comprise different motor devices, so as to be able to be operated independently of each other.

In a variant embodiment not shown in the figures, the further crosspiece 55, which supports the pressing element 50, is fixed and is not moved from the machining area 3 during the movement of the crosspiece 15 towards a discharging area of the second supporting plane. In this case, the sizing of the two crosspieces is different, in particular, the movable crosspiece 15 is shaped to pass under or over the further fixed crosspiece 55.

The machine M according to the invention comprises at least one linear sliding guide 90 positioned or positionable at the base B, substantially parallel to the main extension axis A.

Preferably, a pair of sliding guides are provided, i.e., two sliding guides positioned on the sides of the supporting plane, along with the entire longitudinal extension of the base B.

Advantageously, the crosspiece 15 and/or the further crosspiece 55, when not fixed, are slidingly coupled to the linear sliding guides 90.

In particular, in the embodiment in which the two crosspieces 15 and 55 are fed independently of each other, a double pair of sliding guides can be provided in such a way as to allow independent movement of the crosspiece 15 and of the further crosspiece 55.

The operation of the machine M object of the present invention takes place in the following way.

When a panel P to be machined slides into the machine M by means of the advancing group, it is subjected, in correspondence with the machining area 3, to machining by said machining means.

In particular, as shown in figures 4 and 5, machining of the head surface T, of the lateral surfaces L1 / L2, of the lower I, and the upper surfaces S and therefore of the tail surface C are carried out, machining performed by means of a machining tool 5 of panel P.

Furthermore, a machining head 4, provided laterally to the support plane of the machine, performs the machining on the lateral surfaces of the panel P.

Furthermore, a further group 6 is provided, arranged below the supporting plane, and configured to perform the machining on the head surfaces T or the tail C or on the lower surface I of the panel P.

In a preferred embodiment, when a tail surface C of the panel P slides beyond the processing area 3, this is further made to advance towards the discharging area of the second support half-plane 2, by means of the gripping means, which advance with the crosspiece 15.

Once the tail surface C of the panel P has been positioned near the discharging area of the machine, as shown in figure 6, the crosspiece 15 is repositioned in a loading area of the first half-plane to grip a new panel P to be machined and the further crosspiece 55 is repositioned at the machining area 3 to ensure the stability of the portion of the panel P being machined.

The advancement and the workings carried out on the panel P are in particular managed by a logic control unit, which, for example, adjusts the advancement speed of the movable crosspiece 15, on which the gripping means 10, or the gripping means 20 are constrained, as a function of the specific machining to be carried out in correspondence with zone 3.

Advantageously, in all forms and descriptive variants, the panel is maintained and transported ensuring positioning accuracy due to the use of the gripping or gripping means, during the sliding with respect to the first support half-plane 1, and during the sliding with respect to the second half-plane 2 of support.

## Claims

1. Machine (M) for machining a panel (P) made of wood, plastic, fiberglass, glass or the like, wherein said panel (P) has a first (L1) and a second (L2) lateral surface, a head surface (T) and an end surface (C), a lower surface (I) and an upper surface (S), respectively opposite to each other, said squaring machine (M) comprising:
- a base (B);
- a panel (P) supporting plane, arranged on said base (B), wherein said supporting plane is divided into a first supporting half-plane (1), having a panel (P) loading area, and a second supporting half-plane (2), having a panel (P) discharging area, wherein a machining area (3) is provided between said first supporting half-plane (1) and said second supporting half-plane (2);
- machining means (4; 5; 6) for machining the panel (P), positioned at said machining area (3), configured to machine the panel (P); and
- a panel (P) advancing group (100; 200; 300) configured to move the panel (P) from said loading area of said first supporting half-plane (1) to said discharging area of said second supporting half-plane (2),
wherein said machine (M) is **characterized in that**
said panel (P) advancing group (100; 200; 300) comprises panel (P) gripping means (10, 20, 30), configured to grip at least two opposite faces of the panel (P) when the panel (P) is moved to said loading area of said first supporting half-plane (1) or to said discharging area of said second supporting half-plane (2) or from said loading area of said first supporting half-plane (1) to said discharging area of said second supporting half-plane (2),
said machining means (4; 5; 6) comprises:
at least one machining group (6) arranged below said supporting plane and configured to machine at least the lower surface (I) of the panel (P); and
at least one machining group (4) arranged laterally to said supporting plane, configured for machining said first (L1) and/or said second (L2) lateral surface.

2. Machine (M) according to the preceding claim, wherein said advancing group (100; 200; 300) comprises moving means (15, 55) of said gripping means (10, 20, 30) configured for moving said gripping means (10, 20, 30) along said main extension axis (A) of the squaring machine (M).

3. Machine (M) according to any one of the preceding claims, wherein said gripping means (10, 20) comprises at least one vice element (10, 20) to grip the panel (P).

4. Machine (M) according to the preceding claim, wherein said moving means comprises a supporting crossbar (15), positioned or positionable transversely to the main extension axis (A) of the squaring machine (M), said at least one panel (P) gripping vice (10, 20) being slidably coupled or fixed to said supporting crossbar (15) and configured for gripping the panel (P).

5. Machine (M) according to the preceding claim, wherein said at least one gripping vice (10) of said advancing group (100) comprises two jaws having gripping surfaces (10a, 10b) substantially parallel to said supporting plane (2) and configured to grasp the panel (P) at the end surface (C) or at the head surface (T), to maintain and/or to move the panel (P) at the desired position.

6. Machine (M) according to claim 4, wherein said at least one gripping vice (20) of said advancing group (200) comprises two jaws having gripping surfaces (20a, 20b) substantially perpendicular to said supporting plane (2) and configured to grasp the panel (P) at the first lateral surface (L1) and/or at the second lateral surface (L2), to maintain and/or to move the panel (P) at the desired position.

7. Machine (M) according to claim 1 or 2, wherein said gripping means comprises at least a pair of conveyor belts (30), wherein each pair comprises a first (30a) and a second (30b) belt vertically aligned and spaced apart, or spaceable apart, so as to allow a gripping of at least a portion of said panel (P) being machined between said first (30a) and second (30b) belt.

8. Machine (M) according to the preceding claim, wherein said moving means comprises at least one pulley (35), keyed on a shaft transverse to the main extension axis (A) of the machine (M), wherein at least one belt (30a; 30b) of said pair of conveyor belts (30) is wound on said pulley (35) and configured to be coupled to a surface of the panel (P) being machined.

9. Machine (M) according to claim 7 or 8, comprising actuator means configured to vertically move said belts (30a; 30b) and to adjust their relative distance, according to the thickness of the panel (P).

10. Machine (M) according to any one of the preceding claims, comprising at least one pressing element (50) positioned or positionable at said machining area (3) configured to counteract the stresses on the panel (P) generated, during the machining, by said machining means (4; 5; 6).

11. Machine (M) according to the preceding claim, wherein said at least one pressing element (50) is coupled to a further supporting crosspiece (55), positioned or positionable transversely to the main extension axis (A) of the squaring machine.

12. Machine (M) according to any one of the preceding claims, comprising at least one pair of linear sliding guides (90) positioned or positionable at said base (B), substantially parallel to said main extension axis (A), wherein said moving means (15), and/or said further supporting crosspiece (55), are slidably coupled to said at least one pair of linear sliding guides (90).

13. Machine (M) according to any one of the preceding claims, wherein said advancing group (100; 200; 300) comprises moving means (15; 55) of said gripping means (10, 20, 30), configured to move said gripping means (10, 20, 30) along an axis (A) of main extension of the squaring machine,
the overall configuration of said advancing group (100; 200; 300) being such that during an advancement of the panel (P) being machined, said gripping means (10, 20, 30) are moved from a loading zone to a discharge zone of a supporting surface of the squaring machine to guide the advancement of the panel (P) being processed.

## Patentansprüche

1. Maschine (M) zum Bearbeiten einer Platte (P) aus Holz, Kunststoff, Glasfaser, Glas oder dergleichen, wobei die Platte (P) eine erste (L1) und eine zweite (L2) Seitenfläche, eine Kopffläche (T) und eine Endfläche (C), eine untere Fläche (I) und eine obere Fläche (S) aufweist, die jeweils einander gegenüberliegen, wobei die Abkantmaschine (M) umfasst:
- eine Basis (B);
- eine Platten-(P)-Trägerebene, die auf der Basis (B) angeordnet ist, wobei die Trägerebene in eine erste Träger-Halbebene (1) mit einem Platten-(P)-Beladebereich und eine zweite Träger-Halbebene (2) mit einem Platten- (P) -Entladebereich unterteilt ist, wobei ein Bearbeitungsbereich (3) zwischen der ersten Träger-Halbebene (1) und der zweiten Träger-Halbebene (2) vorgesehen ist:
- Bearbeitungsmittel (4; 5; 6) zur Bearbeitung der Platte (P), die in dem Bearbeitungsbereich (3) angeordnet sind und so konfiguriert sind, dass sie die Platte (P) bearbeiten; und
- eine Vorschubgruppe (100; 200; 300) für die Platte (P), die so konfiguriert ist, dass sie die Platte (P) von dem Ladebereich der ersten tragenden Halbebene (1) zu dem Entladebereich der zweiten tragenden Halbebene (2) bewegt,
wobei die Maschine (M) **dadurch gekennzeichnet ist, dass**
die Vorschubgruppe (100; 200; 300) für die Platte (P) eine Greifeinrichtung (10, 20, 30) für die Platte (P) umfasst, die so konfiguriert ist, dass sie mindestens zwei gegenüberliegende Flächen der Platte (P) ergreift, wenn die Platte (P) zu dem Ladebereich der ersten tragenden Halbebene (1) oder zu dem Entladebereich der zweiten tragenden Halbebene (2) oder von dem Ladebereich der ersten tragenden Halbebene (1) zu dem Entladebereich der zweiten tragenden Halbebene (2) bewegt wird,
die Bearbeitungseinrichtung (4; 5; 6) umfasst:
mindestens eine Bearbeitungsgruppe (6), die unterhalb der Stützebene angeordnet und so konfiguriert ist, dass sie mindestens die untere Fläche (I) der Platte (P) bearbeitet; und
mindestens eine Bearbeitungsgruppe (4), die seitlich zu der Stützebene angeordnet ist und für die Bearbeitung der ersten (L1) und/oder der zweiten (L2) Seitenfläche konfiguriert ist.

2. Maschine (M) nach dem vorhergehenden Anspruch, wobei die Vorschubgruppe (100; 200; 300) eine Bewegungseinrichtung (15, 55) der Greifeinrichtung (10, 20, 30) umfasst, die so konfiguriert ist, dass sie die Greifeinrichtung (10, 20, 30) entlang der Haupterstreckungsachse (A) der Quadriermaschine (M) bewegt.

3. Maschine (M) nach einem der vorhergehenden Ansprüche, wobei die Greifmittel (10, 20) mindestens ein Schraubstockelement (10, 20) zum Greifen der Platte (P) umfassen.

4. Maschine (M) nach dem vorhergehenden Anspruch, wobei das Bewegungsmittel eine tragende Querstange (15) umfasst, die quer zur Hauptausdehnungsachse (A) der Abkantmaschine (M) positioniert oder positionierbar ist, wobei der mindestens eine die Platte (P) greifende Schraubstock (10, 20) verschiebbar mit der tragenden Querstange (15) gekoppelt oder daran befestigt ist und zum Greifen der Platte (P) konfiguriert ist.

5. Maschine (M) nach dem vorhergehenden Anspruch, wobei der mindestens eine Spannstock (10) der Vorschubgruppe (100) zwei Backen umfasst, die Greifflächen (10a, 10b) aufweisen, die im Wesentlichen parallel zu der Stützebene (2) verlaufen und so konfiguriert sind, dass sie die Platte (P) an der Endfläche (C) oder an der Kopffläche (T) ergreifen, um die Platte (P) in der gewünschten Position zu halten und/oder zu bewegen.

6. Maschine (M) nach Anspruch 4, wobei der mindestens eine Spannstock (20) der Vorschubgruppe (200) zwei Klemmbacken umfasst, die Greifflächen (20a, 20b) aufweisen, die im Wesentlichen senkrecht zu der Stützebene (2) verlaufen und so konfiguriert sind, dass sie die Platte (P) an der ersten Seitenfläche (L1) und/oder an der zweiten Seitenfläche (L2) ergreifen, um die Platte (P) in der gewünschten Position zu halten und/oder zu bewegen.

7. Maschine (M) nach Anspruch 1 oder 2, wobei das Greifmittel mindestens ein Paar von Förderbändern (30) umfasst, wobei jedes Paar ein erstes (30a) und ein zweites (30b) Band umfasst, die vertikal ausgerichtet und voneinander beabstandet sind oder voneinander beabstandet werden können, um ein Greifen von mindestens einem Teil der Platte (P) zu ermöglichen, die zwischen dem ersten (30a) und dem zweiten (30b) Band bearbeitet wird.

8. Maschine (M) nach dem vorhergehenden Anspruch, wobei das Bewegungsmittel mindestens eine Riemenscheibe (35) umfasst, die auf einer Welle quer zur Hauptausdehnungsachse (A) der Maschine (M) verkeilt ist, wobei mindestens ein Riemen (30a; 30b) des Paares von Förderbändern (30) auf die Riemenscheibe (35) gewickelt ist und so konfiguriert ist, dass er mit einer Oberfläche der zu bearbeitenden Platte (P) gekoppelt ist.

9. Maschine (M) nach Anspruch 7 oder 8, mit Betätigungsmitteln, die so konfiguriert sind, dass sie die Bänder (30a; 30b) vertikal bewegen und ihren relativen Abstand entsprechend der Dicke der Platte (P) einstellen.

10. Maschine (M) nach einem der vorhergehenden Ansprüche, die mindestens ein Druckelement (50) umfasst, das in dem Bearbeitungsbereich (3) angeordnet oder positionierbar ist und so konfiguriert ist, dass es den während der Bearbeitung durch die Bearbeitungsmittel (4; 5; 6) erzeugten Spannungen an der Platte (P) entgegenwirkt.

11. Maschine (M) nach dem vorhergehenden Anspruch, wobei das mindestens eine Andrückelement (50) mit einer weiteren Traverse (55) gekoppelt ist, die quer zur Haupterstreckungsachse (A) der Quadriermaschine angeordnet oder positionierbar ist.

12. Maschine (M) nach einem der vorhergehenden Ansprüche, umfassend mindestens ein Paar linearer Gleitführungen (90), die an der Basis (B) im Wesentlichen parallel zur Hauptausdehnungsachse (A) positioniert oder positionierbar sind, wobei das Bewegungsmittel (15) und/oder das weitere tragende Querstück (55) gleitend mit dem mindestens einen Paar linearer Gleitführungen (90) verbunden sind.

13. Maschine (M) nach einem der vorangehenden Ansprüche, wobei die Vorschubgruppe (100; 200; 300) Bewegungsmittel (15; 55) der Greifmittel (10, 20, 30) umfasst, die so konfiguriert sind, dass sie die Greifmittel (10, 20, 30) entlang einer Achse (A) der Haupterstreckung der Quadriermaschine bewegen,
wobei die Gesamtkonfiguration der Vorschubgruppe (100; 200; 300) derart ist, dass während eines Vorschubs der zu bearbeitenden Platte (P) die Greifmittel (10, 20, 30) von einer Ladezone zu einer Entladezone einer Auflagefläche der Abkantmaschine bewegt werden, um den Vorschub der zu bearbeitenden Platte (P) zu führen.

## Revendications

1. Machine (M) pour l'usinage d'un panneau (P) en bois, plastique, fibre de verre, verre ou similaire, dans lequel ledit panneau (P) a une première (L1) et une deuxième (L2) surface latérale, une surface de tête (T) et une surface d'extrémité (C), une surface inférieure (I) et une surface supérieure (S), respectivement opposées l'une à l'autre, ladite machine à équarrir (M) comprenant:
- une base (B);
- un plan de support du panneau (P), disposé sur ladite base (B), dans lequel ledit plan de support est divisé en un premier demi-plan de support (1), comportant une zone de chargement du panneau (P), et un second demi-plan de support (2), comportant une zone de déchargement du panneau (P), dans lequel une zone d'usinage (3) est prévue entre ledit premier demi-plan de support (1) et ledit second demi-plan de support (2):
- des moyens d'usinage (4; 5; 6) pour l'usinage du panneau (P), positionnés dans ladite zone d'usinage (3), configurés pour usiner le panneau (P); et
- un groupe d'avancement du panneau (P) (100; 200; 300) configuré pour déplacer le panneau (P) de ladite zone de chargement dudit premier demi-plan de support (1) à ladite zone de déchargement dudit second demi-plan de support (2),
dans laquelle ladite machine (M) est **caractérisée par le fait que**
ledit groupe d'avancement du panneau (P) (100; 200; 300) comprend des moyens de préhension du panneau (P) (10, 20, 30), configurés pour saisir au moins deux faces opposées du panneau (P) lorsque le panneau (P) est déplacé vers ladite zone de chargement dudit premier demi-plan de support (1) ou vers ladite zone de déchargement dudit second demi-plan de support (2) ou depuis ladite zone de chargement dudit premier demi-plan de support (1) vers ladite zone de déchargement dudit second demi-plan de support (2), lesdits moyens d'usinage (4; 5; 6) comprennent:
au moins un groupe d'usinage (6) disposé sous ledit plan de support et configuré pour usiner au moins la surface inférieure (I) du panneau (P); et
au moins un groupe d'usinage (4) disposé latéralement par rapport audit plan d'appui, configuré pour l'usinage de ladite première (L1) et/ou de ladite seconde (L2) surface latérale.

2. Machine (M) selon la revendication précédente, dans laquelle ledit groupe d'avancement (100; 200; 300) comprend des moyens de déplacement (15, 55) desdits moyens de préhension (10, 20, 30) configurés pour déplacer lesdits moyens de préhension (10, 20, 30) le long dudit axe principal d'extension (A) de la machine à équarrir (M).

3. Machine (M) selon l'une quelconque des revendications précédentes, dans laquelle ledit moyen de préhension (10, 20) comprend au moins un élément d'étau (10, 20) pour saisir le panneau (P).

4. Machine (M) selon la revendication précédente, dans laquelle ledit moyen de déplacement comprend une barre transversale de support (15), positionnée ou positionnable transversalement à l'axe d'extension principal (A) de la machine à équarrir (M), ledit au moins un étau de préhension de panneau (P) (10, 20) étant couplé de manière coulissante ou fixé à ladite barre transversale de support (15) et configuré pour la préhension du panneau (P).

5. Machine (M) selon la revendication précédente, dans laquelle ledit au moins un étau de préhension (10) dudit groupe d'avancement (100) comprend deux mâchoires ayant des surfaces de préhension (10a, 10b) sensiblement parallèles audit plan de support (2) et configurées pour saisir le panneau (P) au niveau de la surface d'extrémité (C) ou de la surface de tête (T), pour maintenir et/ou déplacer le panneau (P) dans la position souhaitée.

6. Machine (M) selon la revendication 4, dans laquelle ledit au moins un étau de préhension (20) dudit groupe d'avancement (200) comprend deux mâchoires ayant des surfaces de préhension (20a, 20b) sensiblement perpendiculaires audit plan de support (2) et configurées pour saisir le panneau (P) au niveau de la première surface latérale (L1) et/ou de la deuxième surface latérale (L2), pour maintenir et/ou déplacer le panneau (P) dans la position souhaitée.

7. Machine (M) selon la revendication 1 ou 2, dans laquelle ledit moyen de préhension comprend au moins une paire de bandes transporteuses (30), chaque paire comprenant une première (30a) et une seconde (30b) bandes alignées verticalement et espacées, ou pouvant être espacées, de manière à permettre une préhension d'au moins une partie dudit panneau (P) en cours d'usinage entre lesdites première (30a) et seconde (30b) bandes.

8. Machine (M) selon la revendication précédente, dans laquelle ledit moyen de déplacement comprend au moins une poulie (35), clavetée sur un arbre transversal à l'axe d'extension principal (A) de la machine (M), dans laquelle au moins une courroie (30a; 30b) de ladite paire de courroies transporteuses (30) est enroulée sur ladite poulie (35) et configurée pour être couplée à une surface du panneau (P) en cours d'usinage.

9. Machine (M) selon la revendication 7 ou 8, comprenant des moyens d'actionnement configurés pour déplacer verticalement lesdites courroies (30a; 30b) et pour ajuster leur distance relative, en fonction de l'épaisseur du panneau (P).

10. Machine (M) selon l'une quelconque des revendications précédentes, comprenant au moins un élément presseur (50) positionné ou positionnable au niveau de ladite zone d'usinage (3) configuré pour s'opposer aux contraintes sur le panneau (P) générées, lors de l'usinage, par lesdits moyens d'usinage (4; 5; 6).

11. Machine (M) selon la revendication précédente, dans laquelle ledit au moins un élément de pressage (50) est couplé à une autre traverse de support (55), positionnée ou positionnable transversalement à l'axe d'extension principal (A) de la machine à équarrir.

12. Machine (M) selon l'une quelconque des revendications précédentes, comprenant au moins une paire de guides linéaires coulissants (90) positionnés ou positionnables au niveau de ladite base (B), sensiblement parallèles à l'axe principal d'extension (A), dans laquelle lesdits moyens de déplacement (15), et/ou ladite autre traverse de support (55), sont couplés de manière coulissante à ladite au moins une paire de guides linéaires coulissants (90).

13. Machine (M) selon l'une quelconque des revendications précédentes, dans laquelle ledit groupe d'avancement (100; 200; 300) comprend des moyens de déplacement (15; 55) desdits moyens de préhension (10, 20, 30), configurés pour déplacer lesdits moyens de préhension (10, 20, 30) le long d'un axe (A) d'extension principale de la machine à équarrir,
la configuration globale dudit groupe d'avancement (100; 200; 300) est telle que lors d'un avancement du panneau (P) en cours d'usinage, lesdits moyens de préhension (10, 20, 30) sont déplacés d'une zone de chargement à une zone de déchargement d'une surface d'appui de la machine à équarrir pour guider l'avancement du panneau (P) en cours d'usinage.
